# FASCICULE DE BREVET EUROPEEN

(11) **EP 3 393 876 B1**
(45) Date de publication et mention de la délivrance du brevet: **02.10.2019**
(21) Numéro de dépôt: 16815894.7
(22) Date de dépôt: 07.12.2016
(51) Int. Cl.: B60W 30/18, B60W 30/14, B60W 50/08

(54) **PROCEDE ET DISPOSITIF POUR L'ASSISTANCE AU CHANGEMENT DE VITESSE ET AU CHANGEMENT DE VOIE**
VERFAHREN UND VORRICHTUNG ZUR UNTERSTÜTZUNG BEIM GESCHWINDIGKEITSWECHSEL UND SPURWECHSEL
METHOD AND DEVICE FOR ASSISSTING WITH CHANGE OF SPEED AND WITH CHANGE OF LANE

(30) Priorité: 21.12.2015 FR 1562914
(43) Date de publication de la demande: 31.10.2018
(73) Titulaire: PSA AUTOMOBILES S.A., 78300 Poissy (FR)
(72) Inventeur: FERON, Stéphane, 92350 Le Plessis Robinson (FR); TACCORI DUVERGEY, Céline, 92120 Montrouge (FR); LAINE, Vincent, 78340 Les Clayes sous Bois (FR)
(74) Mandataire: Jeannin, Laurent Jean-Pierre
(86) Numéro de dépôt international: PCT/FR2016/053252
(87) Numéro de publication internationale: WO 2017/109321

(56) Documents cités:
- WO-A1-2006/122867
- WO-A1-2009/103388
- DE-A1- 10 134 367
- DE-A1-102011 005 844
- DE-A1-102014 201 282

## Description

L'invention concerne l'assistance à la conduite d'un véhicule et, plus particulièrement, l'assistance au changement de vitesse et au changement de voie.

Il a été récemment proposé d'équiper certains véhicules d'un dispositif de contrôle permettant de les conduire de façon automatisée en fonction d'instructions fournies par leur conducteur, mais sans que ce dernier n'agisse sur les organes de commandes opérationnels comme les pédales ou le volant. Ce type de dispositif de contrôle est donc capable de contrôler le fonctionnement du groupe motopropulseur (ou GMP), la direction assistée et le système de freinage de son véhicule en fonction d'informations relatives notamment à l'environnement de ce dernier (comme par exemple les courbure et pente de la portion de voie de circulation empruntée, les panneaux et lignes de cette portion, et la vitesse relative de chaque véhicule détecté). Ce contrôle se fait au moyen de commandes qui sont fournies à des actionneurs choisis du véhicule.

Un tel dispositif de contrôle propose, par l'intermédiaire d'une interface homme machine, une manoeuvre de changement de voie au conducteur. Une validation du conducteur est requise avant l'engagement de la manoeuvre par le dispositif de contrôle. De cette façon, le dispositif laisse la responsabilité de la décision au conducteur.

Il a aussi été proposé, dans la demande de brevet FR1552540 un dispositif, destiné à réguler la vitesse d'un véhicule permettant que le véhicule roule à une vitesse respectant une nouvelle limitation de vitesse à l'endroit où est situé le panneau indicateur correspondant, tout en gênant le moins possible les autres conducteurs.

Ce dispositif comprend des moyens de traitement agencés, en réponse à une validation par le conducteur du véhicule d'une nouvelle vitesse limite devant être respectée à partir d'une position connue et inférieure à une vitesse de régulation en cours, pour déclencher l'instauration d'un profil de décélération choisi. Le profil de décélération est propre à faire décroître la vitesse de régulation en cours jusqu'à une nouvelle vitesse de régulation respectant la nouvelle limitation de vitesse.

Ce dispositif comme le précédant requiert, avant l'application du profil de vitesse, une validation du conducteur. De cette façon, le dispositif laisse la responsabilité de la décision au conducteur.

Un problème se pose lorsque deux demandes de validations surviennent sensiblement au même moment. C'est, par exemple, le cas lorsque le véhicule parvient à une bifurcation d'autoroute où il faut changer de voie et généralement réduire sa vitesse car la limitation de vitesse est réduite dans cette zone.

On connait par le document WO2006122867 un dispositif d'assistance au changement de voie destiné à des véhicules automobiles, comprenant un dispositif de surveillance qui sert à surveiller le trafic à l'avant et à l'arrière du véhicule auquel il appartient, et un dispositif de prise de décision qui sert à décider si un changement de voie peut s'effectuer sans danger.

On connait aussi par le document DE 10 2014 201 282 une procédure pour un système d'aide à la conduite d'un véhicule qui détermine automatiquement une commande latérale future pour le véhicule et transmet la commande latérale future sous forme de proposition à un conducteur du véhicule. Une demande de confirmation de la proposition est également adressée au conducteur. Une action du conducteur du véhicule exécutée par le conducteur du véhicule en réponse à la demande est détectée et le contrôle transversal est automatiquement exécuté en fonction de l'action du conducteur.

On connait aussi par le document DE 10 2011 005 844 un procédé de commande automatique d'un véhicule dans lequel un mouvement transversal du véhicule est traité au moyen d'un premier arbre de décision et dans lequel un mouvement longitudinal du véhicule est traité au moyen d'un second arbre de décision, dans lequel le premier arbre de décision et le second arbre de décision sont commandés par un générateur d'événements en fonction d'une condition environnementale du véhicule et dans lequel le véhicule est commandé en fonction d'au moins un état du premier arbre de décision ou du second arbre de décision.

L'invention a donc pour but de remédier au problème précité. Elle propose plus précisément à cet effet un procédé d'assistance à la conduite caractérisé en ce qu'il comporte des étapes de :
- détermination d'une proposition de changement de voie, requérant une première validation,
- détermination d'une proposition de changement de vitesse, requérant une deuxième validation,
- détermination d'un temps de validation correspondant à un temps maximal restant au conducteur après la validation de la proposition de changement de voie pour valider la proposition de changement de vitesse,
- Si le temps de validation est inférieur ou égal à un seuil prédéterminé alors l'annulation de la proposition de changement de voie.

Par temps maximal restant au conducteur après la validation de la proposition de changement de voie pour valider la proposition de changement de vitesse, on entend le temps maximal pendant lequel le conducteur peut valider la proposition de changement de vitesse après la validation de la proposition de changement de voie.

L'invention permet d'éviter au conducteur d'avoir deux validations de manoeuvre en même temps. L'invention permet aussi, lorsque deux manoeuvres sont proposées par le véhicule, de laisser au conducteur suffisamment de temps pour valider ces manoeuvres, et en particulier la manoeuvre de changement de vitesse.

L'invention permet de régler un conflit de proposition en décalant dans le temps ou en annulant l'une des propositions afin de laisser le conducteur le temps d'acquitter les deux propositions l'une après l'autre.

Avantageusement, l'étape de détermination d'une proposition de changement de vitesse comporte le calcul d'une position à laquelle on peut, au plus tard, déclencher l'instauration d'un profil de décélération maximal.

Avantageusement, l'étape de détermination d'une proposition de changement de voie, comporte le calcul d'une position de fin manoeuvre.

Avantageusement, le temps de validation est égal à un temps de parcours du véhicule entre la position de fin manoeuvre et la position à laquelle on peut, au plus tard, déclencher l'instauration d'un profil de décélération maximal.

Avantageusement, l'étape de détermination d'une proposition de changement de voie, comporte le calcul d'une position de validation, correspondant à la dernière position à laquelle le conducteur peut acquitter la proposition de validation de changement de voie, le temps de validation est égal à un temps de parcours du véhicule entre la position de validation et la position à laquelle on peut, au plus tard, déclencher l'instauration d'un profil de décélération maximal.

Avantageusement, le procédé d'assistance à la conduite selon l'invention comporte en outre, si la première proposition est la modification de la vitesse et que le temps de validation est supérieur au seuil des étapes de :
- abandon de la proposition de la première manoeuvre.
- Emission de la proposition de la manoeuvre de changement de voie.

Avantageusement, le procédé d'assistance à la conduite selon l'invention comporte en outre, si la première proposition est le changement de voie et que le temps de validation est supérieur au seuil : une étape de terminaison de la manoeuvre de changement de voie.

Avantageusement, le procédé d'assistance à la conduite selon l'invention comporte en outre, une étape d'émission de la proposition (295) de vitesse.

L'invention concerne aussi un dispositif d'assistance à la conduite caractérisé en ce qu'il est agencé pour :
- déterminer une proposition de changement de voie, requérant une première validation,
- déterminer une proposition de changement de vitesse, requérant une deuxième validation,
- déterminer un temps de validation correspondant à un temps maximal restant au conducteur après la validation de la proposition de changement de voie pour valider la proposition de changement de vitesse,
- Si le temps de validation est inférieur ou égal à un seuil prédéterminé (Si) alors annuler la proposition de changement de voie.

L'invention concerne aussi un véhicule caractérisé en ce qu'il comporte un dispositif selon l'invention.

D'autres caractéristiques et avantages de l'invention apparaîtront à l'examen de la description détaillée ci-après, et des dessins annexés, sur lesquels:
- la figure 1 illustre un le système d'assistance automatisée à la conduite ;
- la figure 2 illustre au sein d'un diagramme un exemple de courbe d'évolution de la vitesse d'un véhicule, faisant l'objet d'une régulation de vitesse selon un profil de décélération, en fonction de la distance ;
- la figure 3 illustre au sein d'un diagramme un exemple de déroulement d'une manoeuvre de changement de voie, en fonction de la distance ;
- la figure 4 illustre un organigramme représentant le procédé selon l'invention ;
- la figure 5 illustre un premier cas où un changement de voie doit être validé avant un changement de vitesse ;
- la figure 6 illustre un second cas où un changement de vitesse doit être validé avant un changement de voie.

Les dessins annexés pourront non seulement servir à compléter l'invention, mais aussi contribuer à sa définition, le cas échéant.

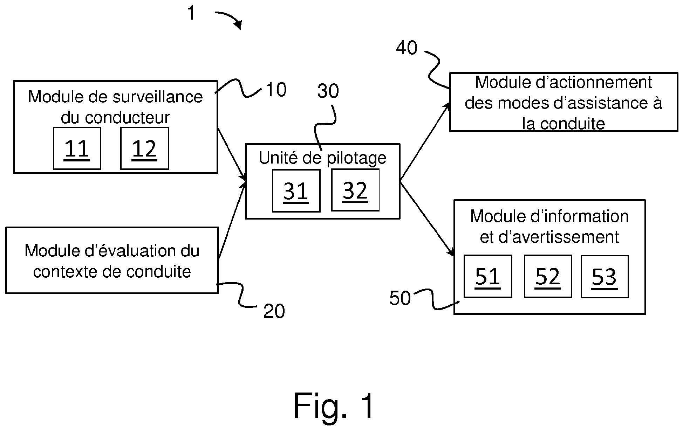

En référence à la figure 1, le système d'assistance automatisée à la conduite 1 comporte un module de surveillance du conducteur 10, un module d'évaluation du contexte de conduite 20, une unité de pilotage 30, un module d'actionnement des modes d'assistance à la conduite 40, ainsi qu'un module d'information et d'avertissement 50.

Le module de surveillance du conducteur 10 comprend par exemple un sous-module 11 de détection de la présence des mains du conducteur sur le volant 10, ainsi qu'un sous-module 12 de détection de celle de ses pieds sur les pédales d'accélération, de freinage et d'embrayage. Le module de surveillance du conducteur 10 peut également comporter une caméra pointée vers le visage du conducteur de façon déterminer son niveau d'attention et/ou la direction de son regard.

Le module d'évaluation du contexte de conduite 20 comprend par exemple une caméra par exemple de type CCD (pour « Capteurs à Couplage de Charges ») orientée vers l'avant du véhicule et délivrant des images permettant de déterminer le type de route empruntée (autoroute, voie rapide ou bien route secondaire) à partir de certains paramètres caractéristiques tels que la largeur de la voie, le marquage au sol (couleur, largeur et espacement des lignes) et la présence éventuelle d'une barrière ou d'un terre-plein central de séparation entre les deux sens de circulation. L'analyse des images fournies par cette caméra permet en outre d'établir le niveau de fluidité du trafic routier.

Le module 20 comporte également une pluralité de capteurs mesurant certains paramètres internes de conduite tels que la vitesse instantanée du véhicule et l'angle de braquage du volant.

Les données recueillies par les deux modules de surveillance du conducteur 10 et d'évaluation du contexte de conduite 20 sont acheminés en temps réel vers l'unité de pilotage 30 à laquelle ces deux modules sont reliés.

L'unité de pilotage 30, constituée de préférence par le boîtier de servitude intelligent (BSI) du véhicule, comporte un calculateur 31 ainsi qu'un module de stockage 32 comprenant de la mémoire non volatile de type EEPROM ou FLASH et de la mémoire vive.

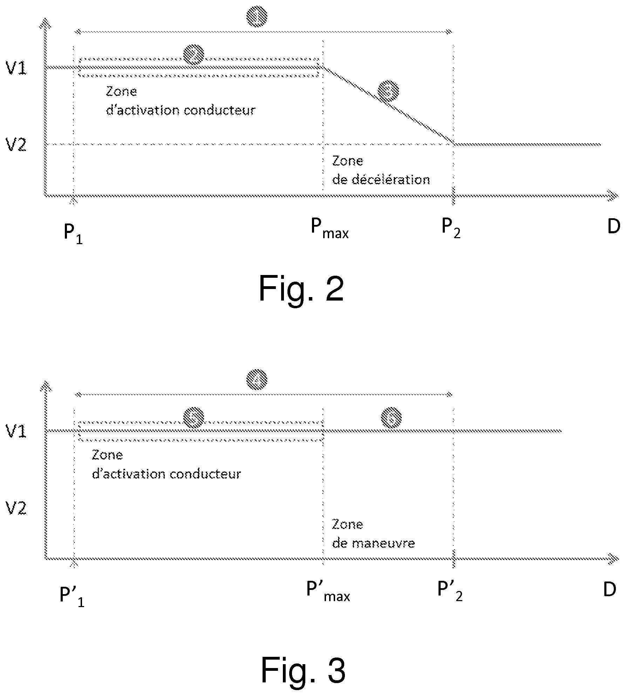

La mémoire non volatile stocke un processus d'aide à l'activation des modes d'assistance à la conduite du véhicule automobile dont l'organigramme est représenté sur la figure 2 et qui est mis en oeuvre par exemple de manière cyclique selon une période prédéterminée comprise de préférence entre 100 ms et 1000 ms.

L'ensemble des informations contenues dans cette mémoire non volatile peut être mis à jour par des moyens de communication ou des moyens de lecture d'un support de données.

L'unité de pilotage 30 est reliée au module d'actionnement 40 auquel elle est apte à transmettre l'ordre d'activer ou de désactiver l'un des modes d'assistance à la conduite.

Ce module d'actionnement 40 comporte une pluralité d'actionneurs aptes à contrôler certains organes du véhicule tels que la direction, l'accélération, le freinage et la boîte de vitesse pour assurer la mise en oeuvre des différents modes d'assistance à la conduite dont est doté le véhicule, à savoir en l'espèce :
- un mode d'assistance au changement de vitesse du véhicule ;
- un mode d'assistance au changement de voie de circulation du véhicule.

Le module d'information et d'avertissement 50 comporte un premier écran d'information 51 intégré au combiné d'instrumentation et/ou un affichage tête haute 50 aptent à diffuser des messages visuels par exemple pour demander une confirmation avant l'engagement de la manoeuvre.

La figure 2 illustre au sein d'un diagramme un exemple de courbe d'évolution de la vitesse d'un véhicule, faisant l'objet d'une régulation de vitesse selon un profil de décélération, en fonction de la distance.

L'assistance au changement de vitesse propose à l'utilisateur une modification de la vitesse à une première position P₁. Cette position est située à distance 1 d'un nouveau panneau de limitation de vitesse située à une deuxième position P₂. L'utilisateur dispose ainsi de toute la distance 2 pour valider cette proposition afin de laisser le véhicule freiner convenablement sur la distance 3.

Le profil de décélération est propre à faire décroître la vitesse de régulation en cours V1 jusqu'à une nouvelle vitesse de régulation V2, qui est au plus égale à la nouvelle vitesse limite sensiblement à la position du panneau P₂. Cette décroissance doit avoir lieu entre une position primaire p_{acc} que possède le véhicule à un instant où son conducteur effectue la validation de la nouvelle vitesse limite proposée et une seconde position pₘₐₓ à laquelle on peut au plus tard déclencher l'instauration d'un profil de décélération maximal.

On entend ici par « profil de décélération» la variation de la vitesse du véhicule qui permet à ce dernier de passer de la vitesse V1 à la vitesse V2.

Par ailleurs, on entend ici par « profil de décélération maximal » le profil de décélération qui permet de faire passer le véhicule le plus rapidement de V1 à V2 sans que la dégradation du confort des passagers ne dépasse un seuil prédéfini et sans que le comportement du véhicule ne soit dangereux pour les autres usagers de la route (par exemple du fait d'un freinage brutal sans raison apparente).

La figure 3 illustre au sein d'un diagramme un exemple de déroulement d'une manoeuvre de changement de voie, en fonction de la distance.

L'assistance au changement propose un changement de voie à une première position P'₁. Le conducteur dispose ensuite d'un temps 5 (ou d'une distance) pour valider la manoeuvre de changement de voie. Le véhicule a besoin d'un temps 6 (ou d'une distance) pour effectuer la manoeuvre. La manoeuvre de changement de voie est terminée lorsque le véhicule est situé sur une deuxième position P'₂. On appelle temps 4, le temps correspondant à la somme du temps 5 et du temps 6.

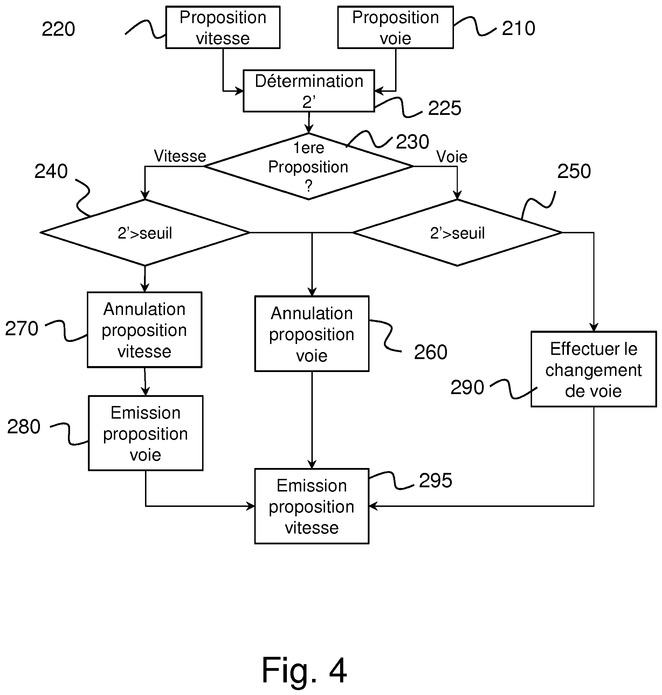

On va maintenant décrire en détails et à l'appui de l'organigramme de la figure 4, les différentes étapes de la première variante du procédé selon l'invention.

Le procédé d'assistance à la conduite comporte une étape de détermination 210 d'une proposition de changement de voie par un mode d'assistance au changement de voie. Ladite proposition requière une première validation.

Le procédé d'assistance à la conduite comporte aussi une étape de détermination 220 d'une proposition de changement de vitesse par un mode d'assistance au changement de vitesse. Ladite proposition requière une deuxième validation.

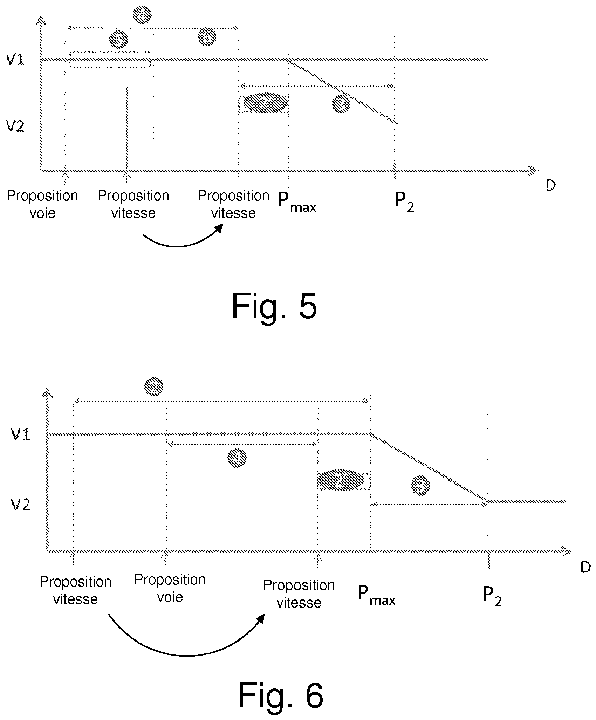

On peut distinguer deux cas de figures : un premier cas où le changement de voie devrait être validé avant le changement de vitesse (illustré à la figure 5) et un second cas où le changement de vitesse devrait être validé avant le changement de voie (illustré à la figure 6).

Dans tous les cas de figures, le procédé comporte la détermination 225 d'un temps de validation (2') correspondant à un temps maximal restant au conducteur après la validation de la proposition de changement de voie pour valider la proposition de changement de vitesse.

Si 240,250 le temps de validation (2') est inférieur ou égal à un seuil prédéterminé (S1) alors l'annulation 260 de la proposition de changement de voie.

On considère que le conducteur ne dispose pas d'assez de temps alors c'est la manoeuvre de changement de voie qui doit être supprimé au profit de la manoeuvre de changement de vitesse. Le procédé privilégie ainsi le respect des limites de vitesse.

On rappelle que :
- l'étape de détermination 220 d'une proposition de changement de vitesse comporte le calcul d'une position Pₘₐₓ à laquelle on peut, au plus tard, déclencher l'instauration d'un profil de décélération maximal.
- l'étape de détermination 210 d'une proposition de changement de voie, comporte le calcul d'une position de fin manoeuvre P'₂.

Selon un premier mode de réalisation, le temps de validation 2' est égal à un temps de parcours du véhicule entre la position de fin manoeuvre P'₂ et la position Pmax.

Dans ce mode de réalisation, on considère que la proposition vitesse ne peut être émise qu'une fois que la manoeuvre de changement de voie est terminée. De cette façon, le conducteur peut superviser la manoeuvre de changement de voie sans être dérangé par la proposition de changement de vitesse.

On rappelle aussi que l'étape de détermination 210 d'une proposition de changement de voie, comporte le calcul d'une position de validation P'ₘₐₓ, correspond à la dernière position à laquelle le conducteur peut acquitter la proposition de validation de changement de voie.

Dans un deuxième mode de réalisation, le temps de validation 2' est égal à un temps de parcours du véhicule entre la position de validation P'ₘₐₓ et la position Pmax.

Ce mode de réalisation autorise l'émission d'une proposition durant la manoeuvre de changement de voie. Ce mode de réalisation a pour avantage de permettre un enchainement des deux propositions sur un temps plus court.

Le procédé d'assistance à la conduite comporte en outre, si la première proposition est la modification de la vitesse 230 et que le temps de validation (2') est supérieure au seuil 240 des étapes de :
- abandon 270 de la proposition de la première manoeuvre.
- émission 280 de la proposition de la manoeuvre de changement de voie.

Le procédé d'assistance à la conduite comporte en outre, si la première proposition 230 est le changement de voie et que le temps de validation 2' est supérieure au seuil 250 une étape de terminaison 290 de la manoeuvre de changement de voie.

Le procédé d'assistance à la conduite comporte en outre une étape d'émission de la proposition 295 de vitesse.

Dans tous les cas de figures, le procédé fini par proposer un changement de vitesse au conducteur de façon à respecter la limitation imposé par le panneau.

La figure 5 illustre un cas où une proposition de changement de voie arrive avant une proposition de changement de vitesse. On suppose que le dispositif détermine 210 une proposition de changement de voie et qu'il détermine aussi une proposition de changement de vitesse devant être émise au cours d'une phase 5. La phase 5 est une phase au cours de laquelle le conducteur peut valider (ou non) la proposition de changement de voie. Avant de soumettre au conducteur une proposition de vitesse, le dispositif détermine 225 un temps de validation 2' correspondant au temps restant au conducteur, après la manoeuvre de changement de voie, pour valider le changement de vitesse.

Si le temps de validation 2' est supérieur à un seuil prédéfini S₁, (qui laisse un temps suffisant au conducteur pour procéder à la validation), le dispositif propose 295 le changement de vitesse une fois la manoeuvre de changement de voie effectuée.

Si le temps de validation 2' est inférieur au seuil prédéfini S₁, la demande de validation du changement de voie est annulée 260. Le véhicule demande 295, à la place, la validation du changement de vitesse.

La figure 6 illustre un cas une proposition de changement de vitesse arrive avant une proposition de changement de voie. On suppose que, pendant une phase 2, le dispositif détermine (ou que le conducteur demande) un changement de voie. La phase 2 est une phase au cours de laquelle le conducteur peut valider (ou non) la proposition de changement de vitesse.

Avant de soumettre au conducteur la proposition de changement de voie, le véhicule calcule un temps de validation 2' correspondant au temps restant au conducteur, après la manoeuvre de changement de voie, pour valider le changement de vitesse. L'estimation de la durée de la phase 4 correspondant au changement de voie comprend : un temps accordé au conducteur pour valider et temps pour la manoeuvre en elle-même.

Si ce temps de validation 2' est supérieur à un seuil prédéfini (Si) le véhicule annule 270 la proposition de changement de vitesse et propose 280 la manoeuvre de changement de voie. La proposition de changement de vitesse réapparait 295 une fois que la manoeuvre de changement de voie est effectuée. Si le temps de validation 2' est inférieur à un seuil prédéfini le véhicule ne propose pas 260 la manoeuvre de changement de voie (ou la refuse si c'est à l'initiative du conducteur et continue 295 la proposition de changement de vitesse engagée.

## Revendications

1. Procédé d'assistance à la conduite comportant une étape de:
- détermination (210) d'une proposition de changement de voie, requérant une première validation.
**caractérisé en ce qu'**il comporte en plus des étapes de:
- détermination (220) d'une proposition de changement de vitesse, requérant une deuxième validation,
- détermination (225) d'un temps de validation (2') correspondant à un temps maximal pendant lequel le conducteur peut valider la proposition de changement de vitesse après la validation de la proposition de changement de voie,
- Si (240,250) le temps de validation (2') est inférieur ou égale à un seuil prédéterminé (Si) alors l'annulation (260) de la proposition de changement de voie.

2. Procédé d'assistance à la conduite selon la revendication 1, **caractérisé en ce que** l'étape de détermination (220) d'une proposition de changement de vitesse comporte le calcul d'une position (Pₘₐₓ) à laquelle on peut, au plus tard, déclencher l'instauration d'un profil de décélération maximal.

3. Procédé d'assistance à la conduite selon l'une des revendications 1 ou 2, **caractérisé en ce que** l'étape de détermination (210) d'une proposition de changement de voie, comporte le calcul d'une position de fin manoeuvre (P'₂).

4. Procédé d'assistance à la conduite selon les revendications 2 et 3, prises en combinaison, **caractérisé en ce que** le temps de validation (2') est égal à un temps de parcours du véhicule entre la position de fin manoeuvre (P'₂) et la position (Pₘₐₓ) à laquelle on peut, au plus tard, déclencher l'instauration d'un profil de décélération maximal.

5. Procédé d'assistance à la conduite selon la revendication 2, **caractérisé en ce que**, l'étape de détermination (210) d'une proposition de changement de voie, comporte le calcul d'une position de validation (P'ₘₐₓ), correspondant à la dernière position à laquelle le conducteur peut acquitter la proposition de validation de changement de voie, le temps de validation (2') est égal à un temps de parcours du véhicule entre la position de validation (P'ₘₐₓ)et la position (Pₘₐₓ) à laquelle on peut, au plus tard, déclencher l'instauration d'un profil de décélération maximal.

6. Procédé d'assistance à la conduite selon l'une des revendications précédente, **caractérisé en ce qu'**il comporte en outre, si la première proposition est la modification de la vitesse (230) et que le temps de validation (2') est supérieur au seuil (240) des étapes de :
- abandon (270) de la proposition de la première manoeuvre.
- Emission de la proposition (280) de la manoeuvre de changement de voie.

7. Procédé d'assistance à la conduite selon l'une des revendications précédentes, **caractérisé en ce qu'**il comporte en outre, si la première proposition (230) est le changement de voie et que le temps de validation (2') (250) est supérieure au seuil : une étape de terminaison de la manoeuvre de changement de voie.

8. Procédé d'assistance à la conduite selon l'une des revendications précédentes, **caractérisé en ce qu'**il comporte en outre une étape d'émission de la proposition (295) de vitesse.

9. Dispositif d'assistance à la conduite agencé pour :
- déterminer une proposition de changement de voie, requérant une première validation,
**caractérisé en ce qu'**il est en plus agencé pour
- déterminer une proposition de changement de vitesse, requérant une deuxième validation,
- déterminer un temps de validation (2') correspondant à un temps maximal restant au conducteur après la validation de la proposition de changement de voie pour valider la proposition de changement de vitesse,
- Si le temps de validation (2') est inférieur ou égal à un seuil prédéterminé (Si) alors annuler la proposition de changement de voie.

10. Véhicule **caractérisé en ce qu'**il comporte un dispositif selon la revendication précédente.

## Patentansprüche

1. Verfahren zur Unterstützung beim Fahren, umfassend einen Schritt eines:
- Bestimmens (210) eines Spurwechselvorschlags, der eine erste Bestätigung erfordert,
**dadurch gekennzeichnet, dass** es außerdem folgende Schritte umfasst:
- Bestimmen (220) eines Geschwindigkeitswechselvorschlags, der eine zweite Bestätigung erfordert,
- Bestimmen (225) einer Bestätigungszeit (2'), die einer Maximalzeit entspricht, während welcher der Fahrer den Geschwindigkeitswechselvorschlag nach der Bestätigung des Spurwechselvorschlags bestätigen kann,
- Falls (240,250) die Bestätigungszeit (2') kleiner oder gleich einer vorbestimmten Schwelle (S₁) ist, dann die Annullierung (260) des Spurwechselvorschlags.

2. Verfahren zur Unterstützung beim Fahren nach Anspruch 1, **dadurch gekennzeichnet, dass** der Bestimmungsschritt (220) eines Geschwindigkeitswechselvorschlags die Berechnung einer Position (Pₘₐₓ) umfasst, an der man spätestens die Einführung eines Profils maximaler Verlangsamung auslösen kann.

3. Verfahren zur Unterstützung beim Fahren nach einem der Ansprüche 1 oder 2, **dadurch gekennzeichnet, dass** der Bestimmungsschritt (210) eines Spurwechselvorschlags die Berechnung einer Manöverendposition (P'₂) umfasst.

4. Verfahren zur Unterstützung beim Fahren nach den Ansprüchen 2 und 3, in Kombination, **dadurch gekennzeichnet, dass** die Bestätigungszeit (2') gleich einer Fahrzeit des Fahrzeugs zwischen der Manöverendposition (P'₂) und der Position (Pₘₐₓ) ist, an der man spätestens die Einführung eines Profils maximaler Verlangsamung auslösen kann.

5. Verfahren zur Unterstützung beim Fahren nach Anspruch 2, **dadurch gekennzeichnet, dass** der Bestimmungsschritt (210) eines Spurwechselvorschlags die Berechnung einer Bestätigungsposition (P'ₘₐₓ) umfasst, die der letzten Position entspricht, an welcher der Fahrer den Spurwechselbestätigungsvorschlag quittieren kann, die Bestätigungszeit (2') gleich einer Fahrzeit des Fahrzeugs zwischen der Bestätigungsposition (P'ₘₐₓ)und der Position (Pₘₐₓ) ist, an der man spätestens die Einführung eines Profils maximaler Verlangsamung auslösen kann.

6. Verfahren zur Unterstützung beim Fahren nach einem der vorstehenden Ansprüche, **dadurch gekennzeichnet, dass** es weiter, falls der erste Vorschlag die Geschwindigkeitsmodifizierung (230) ist und die Bestätigungszeit (2') über der Schwelle (240) liegt, folgende Schritte umfasst:
- Abbruch (270) des Vorschlags des ersten Manövers.
- Ausgabe des Vorschlags (280) des Spurwechselmanövers.

7. Verfahren zur Unterstützung beim Fahren nach einem der vorstehenden Ansprüche, **dadurch gekennzeichnet, dass** es weiter, falls der erste Vorschlag (230) der Spurwechsel ist und die Bestätigungszeit (2') (250) über der Schwelle liegt: einen Beendigungsschritt des Spurwechselmanövers umfasst.

8. Verfahren zur Unterstützung beim Fahren nach einem der vorstehenden Ansprüche, **dadurch gekennzeichnet, dass** es weiter einen Ausgabeschritt des Geschwindigkeitsvorschlags (295) umfasst.

9. Vorrichtung zur Unterstützung beim Fahren, angeordnet um:
- einen Spurwechselvorschlag zu bestimmen, der eine erste Bestätigung erfordert,
**dadurch gekennzeichnet, dass** sie außerdem angeordnet ist, um
- einen Geschwindigkeitswechselvorschlag zu bestimmen, der eine zweite Bestätigung erfordert,
- eine Bestätigungszeit (2') zu bestimmen, die einer Maximalzeit entspricht, die dem Fahrer nach der Bestätigung des Spurwechselvorschlags bleibt, um den Geschwindigkeitswechselvorschlag zu bestätigen,
- Falls die Bestätigungszeit (2') kleiner oder gleich einer vorbestimmten Schwelle (S₁) ist, dann den Spurwechselvorschlag zu annullieren.

10. Fahrzeug, **dadurch gekennzeichnet, dass** es eine Vorrichtung nach dem vorstehenden Anspruch umfasst.

## Claims

1. Driving-assistance method comprising a step of:
- determining (210) a proposal to change lane, requiring a first validation,
**characterised in that** it also comprises steps of:
- determining (220) a proposal to change speed, requiring a second validation,
- determining (225) a validation time (2') corresponding to a maximum time during which the driver can validate the proposal to change speed after validation of the proposal to change lane,
- if (240,250) the validation time (2') is less than or equal to a predetermined threshold (S₁), then cancelling (260) the proposal to change lane.

2. Driving-assistance method according to claim 1, **characterised in that** the step of determining (220) a proposal to change speed comprises the calculation of a position (Pₘₐₓ) at which it is possible, at the latest, to trigger the institution of a maximum deceleration profile.

3. Driving-assistance method according to any of claims 1 or 2, **characterised in that** the step of determining (210) a proposal to change lane comprises the calculation of an end-of-manoeuvre position (P'₂).

4. Driving-assistance method according to claims 2 and 3, taken in combination, **characterised in that** the validation time (2') is equal to a vehicle travel time between the end-of-manoeuvre position (P'₂) and the position (Pₘₐₓ) at which it is possible, at the latest, to trigger the institution of a maximum deceleration profile.

5. Driving-assistance method according to claim 2, **characterised in that** the step of determining (210) a proposal to change lane comprises the calculation of a validation position (P'ₘₐₓ), corresponding to the last position at which the driver can acknowledge the proposal to validate a change of lane, the validation time (2') is equal to a vehicle travel time between the validation position (P'ₘₐₓ) and the position (Pₘₐₓ) at which it is possible, at the latest, to trigger the institution of a maximum deceleration profile.

6. Driving-assistance method according to any of the preceding claims, **characterised in that** it further comprises, if the first proposal is the modification of the speed (230) and the validation time (2') is above the threshold (240), steps of:
- abandoning (270) the proposal for the first manoeuvre,
- issuing the proposal (280) for the change-of-lane manoeuvre.

7. Driving-assistance method according to any of the preceding claims, **characterised in that** it further comprises, if the first proposal (230) is the change of lane and the validation time (2') (250) is above the threshold: a step of terminating the change-of-lane manoeuvre.

8. Driving-assistance method according to any of the preceding claims, **characterised in that** it further comprises a step of issuing the speed proposal (295).

9. Driving-assistance device arranged to:
- determine a proposal to change lane, requiring a first validation,
**characterised in that** it is also arranged to
- determine a proposal to change speed, requiring a second validation,
- determine a validation time (2') corresponding to a maximum time remaining for the driver after the validation of the proposal to change lane in order to validate the proposal to change speed,
- if the validation time (2') is less than or equal to a predetermined threshold (S₁), then cancel the proposal to change lane.

10. Vehicle **characterised in that** it comprises a device according to the preceding claim.
